# EUROPÄISCHE PATENTSCHRIFT

(11) **EP 1 974 919 B1**
(45) Veröffentlichungstag und Bekanntmachung des Hinweises auf die Patenterteilung: **21.08.2013**
(21) Anmeldenummer: 08102330.1
(22) Anmeldetag: 06.03.2008
(51) Int. Cl.: B41F 33/00, G01J 3/02, G01J 3/46, G01N 21/25

(54) **Farbmessgerät mit Koordinatenabgleich**
Colorimeter with coordinate matching
Colorimètre avec mise en correspondance des coordonnées

(30) Priorität: 29.03.2007 DE 102007015097
(43) Veröffentlichungstag der Anmeldung: 01.10.2008
(73) Patentinhaber: Heidelberger Druckmaschinen Aktiengesellschaft, 69115 Heidelberg (DE)
(72) Erfinder: Kaiser, Michael, 69118 Heidelberg (DE); Geißler, Wolfgang, 76669 Bad Schöborn (DE); Riegel, Christopher, 76646 Bruchsal (DE)

(56) Entgegenhaltungen:
- EP-A- 0 277 329
- EP-A- 1 588 855
- EP-A- 1 911 588
- EP-A1- 0 820 865
- DE-A1- 4 321 179
- DE-A1- 10 317 064
- DE-A1- 10 353 868
- DE-A1-102004 021 600
- US-A- 5 774 635

## Beschreibung

Die vorliegende Erfindung betrifft ein Verfahren zum Messen auf Bedruckstoffen mittels eines Messgeräts und eines Rechners.

Zur Überprüfung der Druckqualität ist es erforderlich, die produzierten Bedruckstoffe zumindest stichprobenartig auf ihre Druckqualität hin zu überprüfen. Dabei spielt insbesondere die korrekte Farbwiedergabe in Bezug auf die Druckvorlage eine wichtige Rolle. Für diesen Zweck sind Farbmessgeräte entwickelt worden, welche die produzierten Bedruckstoffe farblich vermessen und dann mittels eines Rechners einen Abgleich der erfassten Farbwerte mit den Farbwerten der Druckvorlage ermöglichen. Damit liegt die Beurteilung der Druckqualität nicht mehr ausschließlich im Auge des Betrachters, sondern wird durch objektive Messungen unterstützt. Aus der EP 1 588 855 A1 ist eine Vorrichtung zur fotoelektrischen Ausmessung von Bedruckstoffen bekannt. Mit der Vorrichtung werden sogenannte Testcharts densitometrisch oder farbmetrisch ausgemessen. Die Testcharts befinden sich auf den Bedruckstoffen und dienen der Farbmessung. Die Messvorrichtung muss diese Testcharts erfassen. Dazu ist eine automatische Positionierung des Messgeräts über den Testcharts gewünscht. Gemäß der EP 1 588 855 A1 erfolgt die Positionierung mittels eines Roboterarms an einem Messtisch, auf den der Bedruckstoff aufgelegt wird. Der Roboterarm trägt ein fotoelektrisches Messgerät und kann damit einzelne Punkte des zu vermessenden Bedruckstoffes erfassen. Um die Position der Testcharts zu erfassen, wird zunächst die Größe und Orientierung der auf dem Messtisch befindlichen Bedruckstoffe ermittelt. Zu diesem Zweck wird ein sichtbarer Referenzpunkt am Roboterarm von Hand oder elektronisch gesteuert zu drei Messpunkten des aufliegenden Bedruckstoffes bewegt. Der Referenzpunkt hat dabei einen definierten Abstand vom Messkopf des Messgeräts. Aus den xy-Koordinaten der angefahrenen Eckpunkte des Bedruckstoffs sind Größe und Orientierung des Bedruckstoffes unmittelbar berechenbar. Das elektronisch gesteuerte Bewegen des Roboterarms zu den drei Eckpunkten kann durch Drücken geeigneter Tasten an einem externen Rechner gesteuert werden. Dabei wird der Roboterarm in dem Messkopf in x- oder y-Richtung bewegt. In dem externen Rechner sind außerdem für gängige Testcharts die geometrischen Daten wie Abmessungen und Anordnung der vorhandenen Messfelder abgespeichert. Nach dem durch das zuvor genannte Verfahren die Größe und Position des aufliegenden Bedruckstoffs bestimmt wurde, können mit dem Wissen der abgespeicherten Daten die absoluten xy-Koordinaten der Testcharts auf der Druckvorlage berechnet werden. In Kenntnis der verwendeten Testcharts können dann die weiteren Messvorgänge automatisch vorgenommen werden. Diese Anordnung hat jedoch den Nachteil, dass nur bekannte Testcharts auf Bedruckstoffen automatisch vermessen werden können. Es ist jedoch nicht möglich, gezielt einzelne Messpunkte auf einem aufliegenden Bedruckstoff auszuwählen.

Aus der DE 195 25 186 A1 ist ein Verfahren zum Bestimmen von Messorten beim Abtasten von Druckprodukten zur Regelung der Farbgebung beim Drucken von Nutzen bekannt. Bei diesem Verfahren kann an einem Bildschirm mit Hilfe einer Zeigeeinrichtung wie einer Computermaus oder eines Trackballs ein Messort auf einem Nutzen ausgewählt werden. Für die weiteren Nutzen auf einem Bedruckstoff werden dann die entsprechenden Messpunkte in den jeweiligen Nutzen in Kenntnis der Lage der Nutzen zueinander berechnet und für die Farbmessung verwendet. Ziel dieses Verfahrens ist es also, einen auf einem Nutzen eines Bedruckstoffs ausgewählten Messpunkt automatisch auf die entsprechenden Stellen der anderen Nutzen auf dem selben Bedruckstoff zu übertragen. Es ist jedoch auch hier nicht möglich, einzelne Messpunkte im Druckbild beliebig auszuwählen.

Aus der DE 43 21 179 A1 ist ein Verfahren bekannt, das eine Auswahl eines repräsentativen Farbmessortes von Hand ermöglicht. Dazu werden aus Bildinformationen, die mindestens die Oberfläche eines Druckerzeugnisses wiedergeben, Koordinaten für die Messorte einer Bildaufnahmeeinrichtung bestimmt. An jedem Messort erfasst die Bildaufnahmeeinrichtung von der Oberfläche eines Druckerzeugnisses ein Messfeld definierter Größe.

Es ist Aufgabe der vorliegenden Erfindung, ein Verfahren zum Vermessen von Bedruckstoffen zu schaffen, welches dem Anwender eine einfache und gezielte Auswahlmöglichkeit einzelner Messpunkte über eine Anzeigevorrichtung ermöglicht.

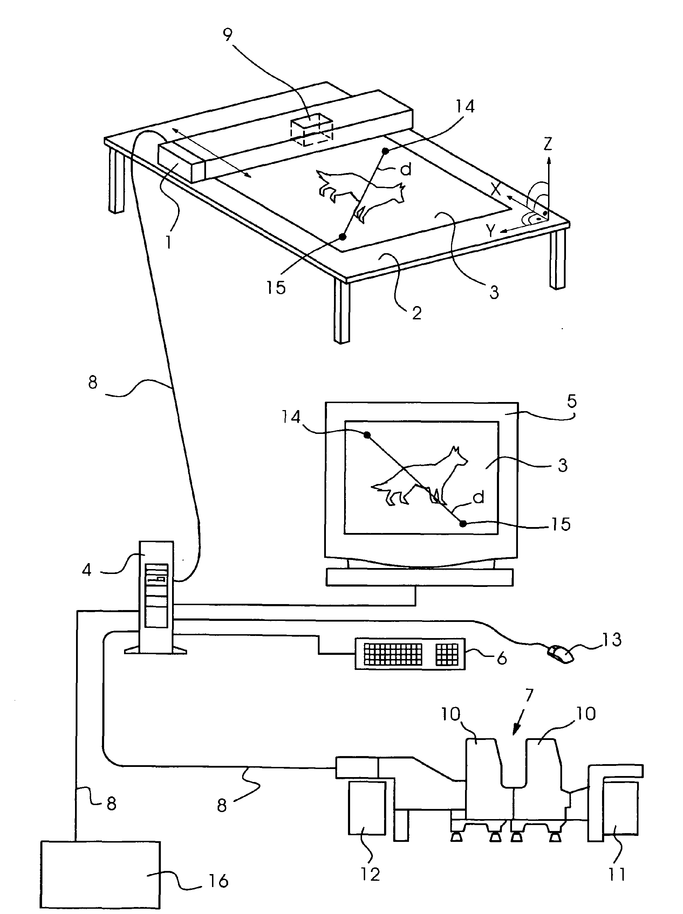

Die vorliegende Aufgabe wird erfindungsgemäß durch das Verfahren gemäß Patentanspruch 1 gelöst. Vorteilhafte Ausgestaltungen der Erfindung sind den Unteransprüchen und der Zeichnung zu entnehmen. Das Verfahren gemäß Patentanspruch 1 kann sowohl bei Inline-Messgeräten als auch bei Offline-Messgeräten eingesetzt werden. Inline-Messgeräte befinden sich in der Druckmaschine und vermessen ständig die Bahnen oder Bogen in der Maschine. Offline-Messgeräte sind meist in Form eines Messtisches ausgebildet, auf den ein Bedruckstoff aufgelegt ist und von einem Messgerät erfasst wird. Insbesondere bei den Offline-Messgeräten können einzelne Messpunkte auf dem Bedruckstoff erfasst werden. Diese Messpunkte kann der Anwender weitgehend frei wählen. Dazu muss er den Messkopf entsprechend über den ausgewählten Messpunkten positionieren. Bei dem vorliegenden Verfahren ist diese Positionierung nun weitgehend automatisiert und komfortabler vorzunehmen. Das Messgerät wird insbesondere dazu genutzt, punktförmige Farbmessungen durchzuführen und ist mit einem Rechner verbunden. Dieser Rechner hat Zugriff auf die digitalen Daten einer zu dem zu vermessenden Bedruckstoff passenden Druckvorlage. Des Weiteren ist dem Rechner wenigstens ein Referenzpunkt auf dem Bedruckstoff relativ zum Messgerät bekannt. Damit wird sichergestellt, dass die Lage des Bedruckstoffs relativ zum Messgerät dem Rechner ebenfalls bekannt ist. Über eine Eingabevorrichtung wie eine Tastatur, eine Computermaus oder einen Touchscreen in Verbindung mit einer Anzeigevorrichtung wie einem Bildschirm kann nun der Anwender einen Messpunkt für die nachfolgende Farbmessung auf dem Bedruckstoff auswählen. Dazu wird das Druckbild des zu vermessenden Bedruckstoffs auf dem Bildschirm angezeigt und der Anwender kann über den Touchscreen, die Computermaus oder die Tastatur einen Cursor auf dem Bildschirm hin- und herbewegen und den entsprechenden Messpunkt auswählen und mit einer Eingabe bestätigen. Damit ist dem Rechner der Messpunkt relativ zu den Koordinaten der digitalen Druckvorlage bekannt. Des Weiteren ermittelt der Rechner den zugehörigen Referenzpunkt dieser digitalen Druckvorlage, dessen relative Lage zum Messgerät im Rechner ebenfalls bekannt ist. Es findet also ein Koordinatenabgleich der Referenzpunkte auf dem Bedruckstoff und in der Bilddatei statt. Nach der Ermittlung des Referenzpunkts in der Bilddatei kann der Rechner die relative Position des ausgewählten Messpunkts zu dem ermittelten Referenzpunkt berechnen. Ausgehend von der so ermittelten relativen Position in der Bilddatei kann der Rechner dann außerdem die relative Position des Messpunkts zu dem Referenzpunkt auf dem Bedruckstoff berechnen, so dass dem Messgerät am Ende die Koordinaten des ausgewählten Messpunkts auf dem Bedruckstoff zur Verfügung stehen. Die so berechneten Koordinaten des Messpunkts kann das Messgerät für den Messvorgang anfahren. Damit wird erstmals ein Verfahren offenbart, mit dem am Bildschirm einfach einzelne Messpunkte ausgewählt werden können, deren Koordinaten dann in Positionskoordinaten für das Messgerät zur Erfassung der einzelnen Messpunkte umgerechnet werden.

Gemäß der Erfindung ist vorgesehen, dass die Bilddatei an den Rechner von einer Druckvorstufe übertragen wird. Die auf dem Bildschirm angezeigten Daten sind grundsätzlich durch die Auflösung des Bildschirms beschränkt. Die Auflösung der Druckbilder ist jedoch weitaus höher als die Auflösung der Bildschirme, so dass die Druckvorlage nicht 1:1 am Bildschirm angezeigt werden kann. Trotzdem ist es jedoch sinnvoll, auf die Bilddaten aus der Druckvorstufe zuzugreifen, da diese die maximale Auflösung in Bezug auf auszuwählende Messpunkte aufweisen, so dass unter Abgleich der Bilddatei aus der Druckvorstufe die entsprechenden Messpunkte mit ausreichender Genauigkeit ausgewählt werden können. Zur Darstellung am Bildschirm wird die Bilddatei auch nicht vollständig auf den Rechner übertragen, es reicht aus, wenn der Rechner auf die Daten der Druckvorstufe Zugriff hat und die Daten zur Darstellung am Bildschirm in reduzierter Form entsprechend der Auflösung des Bildschirms erfolgen. Damit wird die zu übertragende Datenmenge an den Rechner reduziert.

Vorteilhafterweise ist vorgesehen, dass das Messgerät eine Druckbogenauflage aufweist, dass der Druckbogen auf der Druckbogenauflage in einer definierten Position fixiert wird, und diese Position dem Rechner bekannt ist. In diesem Fall handelt es sich um ein Offline-Messgerät, bei dem der Bedruckstoff auf einem Messtisch abgelegt wird. Dieser Messtisch dient als Druckbogenauflage, wobei mittels Anschlägen oder Markierungen eine genau definierte Positionierung des Druckbogens im Verhältnis zu der Druckbogenauflage vorgenommen werden kann. Die Position dieser definierten Ablage des Bedruckstoffs auf der Druckbogenauflage ist dem Rechner bekannt, so dass bei richtiger Positionierung des Bedruckstoffes der benötigte Referenzpunkt in Form der bekannten Position dem Rechner vorliegt.

In einer weiteren Ausgestaltung der Erfindung ist vorgesehen, dass der Bedruckstoff am Messgerät mittels Führungselementen in einer definierten Lage vorbeigeführt wird. Diese Ausgestaltung der Erfindung ist insbesondere für Inline-Messgeräte in der Druckmaschine geeignet, wo die Bedruckstoffe zum Beispiel mittels Greifern auf den Zylindern in der Druckmaschine in einer definierten Position am Messgerät vorbeigeführt werden. Wenn die Führungselemente mit ausreichender Genauigkeit arbeiten, ist auch hier die Lage der einzelnen Bedruckstoffe dem Rechner jeweils bekannt und kann als Referenzposition genutzt werden.

Des Weiteren ist es auch möglich, dass zu Beginn des Messvorgangs die Position eines Referenzpunkts auf dem Bedruckstoff durch die Steuerung des Messgeräts angefahren wird und die Position des angefahrenen Referenzpunkts im Rechner abgespeichert wird. In diesem Fall wird die Referenzposition auf dem Bedruckstoff manuell angefahren und dann im Rechner gespeichert.

In einer weiteren Ausgestaltung der Erfindung ist vorgesehen, dass der Referenzpunkt als Markierung auf dem Bedruckstoff aufgebracht ist und sich in einem vorgegebenen Bereich des Bedruckstoffs befindet und dass das Messgerät im vorgegebenen Bereich des Bedruckstoffs den Referenzpunkt automatisch erkennt. In diesem Fall ist der Referenzpunkt in Form einer speziellen Markierung in einem bestimmten Bereich des Bedruckstoffes aufgebracht, so dass das Messgerät mittels eines optischen Scanners lediglich den fraglichen Bereich auf dem Bedruckstoff abtasten muss, um den Referenzpunkt zu finden. Aufgrund der eindeutigen Markierung als Referenzpunkt kann er auf diese Art und Weise diese schneller gefunden werden, da das Messgerät nur den engen vorgegebenen Bereich des Bedruckstoffs abscannen muss und nicht den gesamten Bedruckstoff auf der Suche nach dem vorgegebenen Referenzpunkt.

Die Erfindung wird dahingehend weitergebildet, dass der Referenzpunkt als spezielles Referenzelement auf dem Bedruckstoff codiert aufgebracht ist, dass das Messgerät die Oberfläche des Bedruckstoffs nach diesem speziellen Referenzelement abscannt und dessen Position an den Rechner übermittelt und dort abspeichert. Die eindeutige Codierung des Referenzelements erhöht die Treffsicherheit beim Auffinden desselben erheblich, da sich so das Referenzelement eindeutig vom Bildinhalt des Bedruckstoffs unterscheidet. Insbesondere kann durch die eindeutige Codierung das spezielle Referenzelement auch von gegebenenfalls weiteren Messelementen oder Referenzpunkten unterscheiden werden, welche für andere Messungen benötigt werden. Das Referenzelement kann auch als kleine Fläche ausgebildet sein, um so die die Lage des Bedruckstoffs eindeutiger feststellen zu können. Durch die zweidimensionale z.B. rechteckförmige Ausdehnung des Referenzelements auf dem Bedruckstoff ist dann die Lage des Bedruckstoffs eindeutig durch den Messsensor zu ermitteln, so dass die Koordinaten der Messpunkte dazu eindeutig berechnet werden können.

In einer weiteren Ausgestaltung der Erfindung ist vorgesehen, dass der Rechner die Bilddatei durch optische Erfassung eines Bedruckstoffs mit einer Kamera erfasst. Wenn die digitalen Daten der Druckvorstufe nicht als Bilddatei zur Verfügung stehen, so kann auch eine Druckvorlage mittels einer an einen Rechner angeschlossenen Kamera erfasst werden. Diese Kamera muss eine ausreichend hohe Auflösung aufweisen, so dass die Messpunkte später am Bildschirm in ausreichender Genauigkeit ausgewählt werden können. Mit einer solchen Kamera kann das erfindungsgemäße Verfahren auch dann verwirklicht werden, wenn keine Kommunikationsverbindung zur Druckvorstufe besteht.

Gemäß der Erfindung werden zur Auswahl des Messpunkts auf der Anzeigevorrichtung wenigstens Bereiche der Bilddatei auf der Anzeigevorrichtung vergrößert dargestellt. Aufgrund der bereits eingangs erwähnten geringen Auflösung des Bildschirms im Vergleich zur Druckvorlage und zum Bedruckstoff können bei einer Vollbilddarstellung auf dem Bildschirm die Messpunkte nicht mit genügender Genauigkeit durch einen Cursor angewählt werden. Zu diesem Zweck können zumindest einzelne Bereiche des Bedruckstoffs vergrößert durch eine Lupenfunktion dargestellt werden. Die Vergrößerung kann dabei soweit gehen, dass der ausgewählte Bereich mit der gleichen Auflösung wie die Bilddatei dargestellt werden kann. In diesem Fall ist ein entsprechend kleiner Ausschnitt auf dem Bildschirm stark vergrößert zu sehen. Damit kann dann der gewünschte Messpunkt genau am Bildschirm ausgewählt werden. Um auch in diesem Fall die von der Druckvorstufe benötigte Datenrate gering zu halten, ist die Datenübertragung derart vorgesehen, dass nur die Daten des gerade vergrößerten Auswahlbereiches der Bilddatei von der Druckvorstufe auf den Rechner übertragen und dann vergrößert zur Anzeige gebracht werden. Dadurch wird vermieden, dass die gesamte Bilddatei von der Druckvorstufe zum Rechner übertragen werden muss.

Die vorliegende Erfindung wird nachfolgend anhand einer Figur näher beschrieben und erläutert. Es zeigt:
- Figur: einen an einen Rechner angeschlossenen Messtisch, wobei über einen Bildschirm am Rechner Messpunkte für das Messgerät des Messtischs ausgewählt werden können.

Die Figur zeigt schematisch den Aufbau einer Druckerei, bei der ein Farbmessgerät, eine Druckmaschine und eine Druckvorstufe miteinander vernetzt sind. Das Farbmessgerät besteht im Wesentlichen aus einem Messbalken 1 und an einem daran befestigten Messkopf 9, welcher in der Lage ist, einen auf einem Messtisch 2 befindlichen Druckbogen 3 farblich zu vermessen. Dazu kann der Messbalken in x-Richtung und der Messkopf in y-Richtung auf dem Messtisch 2 verfahren werden. Auf diese Art und Weise ist es möglich, dass der Messkopf 9 jeden Bildpunkt eines aufliegenden Bedruckstoffes 3 erfassen kann. Das Farbmessgerät ist über eine Kommunikationsverbindung 8 an einen Rechner 4 angeschlossen. Dieser Rechner 4 weist einen Bildschirm 5 auf, welcher als Touchscreen ausgeführt ist. Des Weiteren sind an den Rechner 4 eine Tastatur 6 und eine Computermaus 13 angeschlossen. Über Tastatur 6, Computermaus 13 und den als Touchscreen ausgeführten Bildschirm 5 kann das Bedienpersonal den Rechner 4 steuern. Über eine weitere Kommunikationsverbindung 8 ist an den Rechner 4 die Maschinensteuerung einer Druckmaschine 7 angeschlossen. Die schematisch abgebildete Druckmaschine 7 ist eine Bogenrotationsdruckmaschine mit zwei Druckwerken 10, einem Anleger 11 zur Zufuhr von Bedruckstoffen und einem Ausleger 12 zur Ablage der produzierten Bedruckstoffe. In der Druckmaschine 7 produzierte Bedruckstoffe können dann auf dem Messtisch 2 zur farblichen Vermessung abgelegt werden. Außerdem ist an den Rechner 4 über eine Kommunikationsverbindung 8 ein Gerät der Druckvorstufe 16 angeschlossen, so dass der Rechner 4 auf die digitalen Druckvorlagen in der Vorstufe 16 zugreifen kann.

Die digitale Druckvorlage aus der Druckvorstufe 16 kann auf dem Bildschirm 5 als Vollbild oder bei Vergrößerung in Ausschnitten angezeigt werden. Auf der so angezeigten Druckvorlage kann das Bedienpersonal mittels der Eingabemittel 5, 6, 13 des Rechners 4 den gewünschten Messpunkt 15 auswählen, welchen der Messkopf 9 des Farbmessgeräts erfassen soll. Der so ausgewählte Messpunkt 15 stellt ein bestimmtes x-y-Koordinatenpaar der digitalen Bilddatei aus der Druckvorstufe 16 dar. Nach dem folgenden Verfahren berechnet der Rechner 4 nun die entsprechenden Koordinaten des zugehörigen Messpunkts 15 auf dem realen Druckbogen 3, welche dann von dem Messkopf 9 zur Vermessung angefahren werden können. Dazu muss dem Rechner 4 zunächst die Lage des Druckbogens 3 relativ zum Farbmessgerät bekannt sein. Zu diesem Zweck erfasst das Farbmessgerät einen speziell codiert aufgebrachten Referenzpunkt 14 auf dem Druckbogen 3. Dieser Referenzpunkt 14 ist so codiert, dass er eindeutig vom restlichen Druckbild unterschieden und erkannt werden kann. Nachdem das Messgerät mit dem Messkopf 9 den Referenzpunkt 14 identifiziert und erfasst hat, meldet es die Position bezogen auf x-y-Koordinaten des Messgeräts an den Rechner 4 weiter. In der digitalen Druckvorlage aus der Vorstufe 16 ist dieser Referenzpunkt 14 ebenfalls enthalten, so dass der Rechner 4 einen Abgleich in den jeweiligen Koordinaten der Referenzpunkte 14 vornehmen kann. Des Weiteren kann der Rechner die relative Lage d des am Bildschirm 5 ausgewählten Messpunkts 15 zu dem Referenzpunkt 14 der digitalen Bilddatei berechnen und dann diese relative Lage d unter Berücksichtigung der ermittelten Koordinaten des Referenzpunkts 14 auf dem Druckbogen 3 dazu verwenden, auch die x-y-Koordinaten des Messpunkts 15 auf dem Druckbogen 3 zu berechnen. Nach erfolgter Berechnung dieser Koordinaten kann dann der Messkopf 9 automatisch über dem Messpunkt 15 auf dem Druckbogen 3 positioniert und die entsprechende Farbmessung durchgeführt werden. Die Berechnung der relativen Lage d von Referenzpunkt 14 und Messpunkt 15 in der digitalen Bilddatei geschieht durch eine Software auf dem Rechner 4, welche anhand der Auflösung der digitalen Bilddatei den relativem Abstand d von Bildpunkten des Messpunkts 15 zum Referenzpunkt 14 ermitteln kann. Die Anzahl der Bildpunkte geteilt durch die Bildauflösung ergibt dann den tatsächlichen Abstand d auf dem Druckbogen, so dass in Kenntnis der absoluten Lage des Referenzpunkts 14 auf dem Druckbogen 3 die Koordinaten des Messpunkts 15 auf dem Druckbogen 3 durch Addition des Vektors d zu den Koordinaten des Referenzpunkts 14 auf dem Bogen 3 berechnet werden kann. Die Auswahl des Messpunkts 15 auf dem Bildschirm 5 erfolgt umso genauer, je mehr sich die Auflösung des angezeigten Druckbildes der Auflösung der digitalen Druckvorlage annähert. Aufgrund der viel höheren Auflösung der Druckvorlage ist es daher für eine hohe Genauigkeit bei der Auswahl des Messpunkts 15 am Bildschirm 5 erforderlich, einzelne Bereiche des Druckbildes, in denen Messpunkte 15 ausgewählt werden sollen, entsprechend vergrößert darzustellen. Eine derartige Vergrößerung kann bis zu einer 1:1-Darstellung am Bildschirm 5 gehen, wobei dann nur noch ein relativ kleiner Ausschnitt am Bildschirm 5 zu sehen ist. Auf diese Art und Weise können aber zielgerecht einzelne Bildpunkte des Druckbilds auf dem Bildschirm 5 ausgewählt werden, welche dann ebenso exakt auf dem realen Druckbogen 3 durch den Messkopf 9 angefahren und vermessen werden können. Der Referenzpunkt 14 auf dem Bildschirm 5 in der Figur ist nur zum besseren Verständnis abgebildet, er wird nicht tatsächlich auf dem Bildschirm 5 angezeigt, da er nur dem Rechner 4 bekannt sein muss. Die Information über den Referenzpunkt 14 bekommt der Rechner 4 aus den digitalen Daten der Druckvorstufe 16, so dass der Referenzpunkt 14 dem Rechner 4 entsprechend bekannt ist. Auch der eingezeichnete Abstandsvektor d auf dem Bildschirm 5 und dem Druckbogen 3 dient nur zur Verdeutlichung der relativen Lage der beiden Punkte 14, 15 zueinander und wird ebenfalls weder auf dem Druckbogen 3 markiert noch auf dem Bildschirm 5 angezeigt. Bei den verwendeten Koordinaten auf dem Bedruckstoff 3 und dem Bildschirm 5 handelt es sich um kartesische Koordinaten XYZ, selbstverständlich können aber auch andere Koordinatensysteme verwendet werden.

### Bezugszeichenliste

- 1: Messbalken
- 2: Messtisch
- 3: Druckbogen
- 4: Rechner
- 5: Bildschirm
- 6: Tastatur
- 7: Druckmaschine
- 8: Kommunikationsverbindung
- 9: Messkopf
- 10: Druckwerk
- 11: Anleger
- 12: Ausleger
- 13: Maus
- 14: Referenzpunkt
- 15: Messpunkt
- 16: Druckvorstufengerät
- d: Abstandsvektor Messpunkt zu Referenzpunkt
- X,Y,Z: Kartesische Koordinaten

## Patentansprüche

1. Verfahren zum Messen auf bogenförmigen Bedruckstoffen (3) mittels eines Messgeräts (1, 9) und eines Rechners (4), wobei dem Rechner (4) die Lage wenigstens eines Referenzpunkts (14) auf dem bogenförmigen Bedruckstoff (3) relativ zum Messgerät (1) bekannt ist, wobei über eine Eingabevorrichtung (6, 13) am Rechner (4) ein Messpunkt (15) für die Messung auf dem bogenförmigen Bedruckstoff (3) eingegeben wird, wobei der Rechner (4) auf eine dem bogenförmigen Bedruckstoff (3) entsprechende Bilddatei Zugriff hat und die Lage des wenigstens einen Referenzpunktes (14) in der Bilddatei ermittelt, wobei der Rechner (4) die relative Position vom angegebenen Messpunkt (15) zum Referenzpunkt (14) in der Bilddatei berechnet, wobei der Rechner (4) anhand der ermittelten relativen Position in der Bilddatei die relative Position des Messpunktes (15) zu dem Referenzpunkt (14) auf dem bogenförmigen Bedruckstoff (3) berechnet, wobei das Messgerät (1, 9) den entsprechenden Messpunkt (15) anfährt und auf dem bogenförmigen Bedruckstoff (3) vermisst und wobei die Auswahl des Messpunkts (15) an einer Anzeigevorrichtung (5) des Rechners (4) vorgenommen wird,
**dadurch gekennzeichnet**
**dass** der Rechner (4) auf die Daten einer Druckvorstufe (16) Zugriff hat, dass die Daten zur Darstellung auf der Anzeigevorrichtung (5) in reduzierter Form entsprechend der Auflösung der Auszeigevorrichtung (5) übertragen werden und dass zur Auswahl des Messpunktes (15) auf der Anzeigevorrichtung (5) wenigstens Bereiche der Bilddatei auf der Anzeigevorrichtung (5) vergrößert dargestellt werden,
wobei nur die Daten des gerade vergrößerten Auswahlbereiches der Bilddatei von der Druckvorstufe (16) auf den Rechner (4) übertragen und dann vergrößert zur Anzeige gebracht werden

2. Verfahren nach Anspruch 1,
**dadurch gekennzeichnet,**
**dass** die Anzeigevorrichtung (5) ein Touchscreen ist.

3. Verfahren nach Anspruch 2,
**dadurch gekennzeichnet,**
**dass** die Auswahl des Messpunkts (15) mittels einer Computermaus (13) oder eines ähnlichen Auswahlgeräts (6) vorgenommen wird.

4. Verfahren nach einem der vorangehenden Ansprüche,
**dadurch gekennzeichnet,**
**dass** zu Beginn des Messvorgangs die Position eines Referenzpunktes (14) auf dem Bedruckstoff (3) durch Steuerung des Messgeräts (1, 9) angefahren wird und die Position des angefahrenen Referenzpunkts (14) im Rechner (4) abgespeichert wird.

5. Verfahren nach einem der Ansprüche 1 bis 4,
**dadurch gekennzeichnet,**
**dass** der Referenzpunkt (14) als Markierung auf dem Bedruckstoff (3) aufgebracht ist und sich in einem vorgegebenen Bereich des Bedruckstoffes (3) befindet und dass das Messgerät (1, 9) im vorgegebenen Bereich des Bedruckstoffes (3) den Referenzpunkt (14) automatisch erkennt.

6. Verfahren nach einem der Ansprüche 1 bis 5,
**dadurch gekennzeichnet,**
**dass** der Referenzpunkt (14) als spezielles Referenzelement auf dem Bedruckstoff (3) codiert aufgebracht ist, dass das Messgerät (1, 9) die Oberfläche die Bedruckstoffes (3) nach diesem speziellen Referenzelement abscannt und dessen Position an den Rechner übermittelt und dort abspeichert.

7. Verfahren nach einem vorhergehenden Ansprüche,
**dadurch gekennzeichnet,**
**dass** der Rechner (4) die Bilddatei durch optische Erfassung eines Bedruckstoffes (3) mit einer Kamera erfasst.

## Claims

1. Method for measuring on sheet-shaped printing materials (3) by means of a measuring device (1, 9) and a computer (4), the position of at least one reference point (14) on the sheet-shaped material (3) relative to the measuring device (1) being known to the computer (4), wherein a measuring point (15) for the measurement on the sheet-shaped printing material (3) is input on an input device (6, 13) on the computer (4), wherein the computer (4) has access to an image file corresponding to the sheet-shaped printing material (3) and determines the position of the at least one reference point (14) in the image file, wherein the computer (4) calculates the relative position of the specified measuring point (15) relative to the reference point (14) in the image file, wherein, based on the determined relative position in the image file, the computer (4) calculates the relative position of the measuring point (15) relative to the reference point (14) on the sheet-shaped printing material (3), wherein the measuring device (1, 9) moves to and measures the corresponding measuring point (15) on the sheet-shaped printing material (3) and wherein the selection of the measuring point (15) is made on a display device (5) of the computer (4),
**characterized in**
**that** the computer (4) has access to the data of a prepress stage (16), that the data are transmitted in reduced form corresponding to the resolution of the display device (5) to be displayed on the display device (5) and that to select the measuring point (15) on the display device (5) at least regions of the image file on the display device (5) are displayed in an enlarged way, wherein only the data of the currently enlarged selection region of the image file are transmitted from the prepress stage (16) to the computer (4) and subsequently displayed in an enlarged way.

2. Method according to Claim 1,
**characterized in**
**that** the display device (5) is a touch screen.

3. Method according to Claim 2,
**characterized in**
**that** the selection of the measuring point (15) is made by means of a computer mouse (13) or a similar selection device (6).

4. Method according to one of the preceding claims,
**characterized in**
**that** at the beginning of the measuring process the position of a reference point (14) on the printing material (3) is moved to by controlling the measuring device (1, 9) and the position of the reference point (14) that has been moved to is stored in the computer (4).

5. Method according to one of Claims 1 to 4,
**characterized in**
**that** the reference point (14) is applied to the printing material (3) as a marking and is located in a predetermined region of the printing material (3) and that the measuring device (1, 9) automatically recognizes the reference point (14) in the predetermined region of the printing material (3).

6. Method according to one of Claims 1 to 5,
**characterized in**
**that** the reference point (14) is applied to the printing material (3) as a special reference element in an encoded way, that the measuring device (1, 9) scans the surface of the printing material (3) for this special reference element and transmits the position thereof to the computer to store it therein.

7. Method according to one of the preceding claims,
**characterized in**
**that** the computer(4) records the image file by optically recording a printing material (3) using a camera.

## Revendications

1. Procédé pour la mesure de supports imprimés en forme de feuilles (3) au myen d'un appareil de mesure (1, 9) et d'un ordinateur (4), l'ordinateur (4) connaissant la position d'au moins un point de référence (14) sur le support imprimé en forme de feuilles (3) par rapport à l'appareil de mesure (1), un point de mesure (15) étant saisi par un dispositif de saisie (6, 13) sur l'ordinateur (4) pour la mesure sur le support imprimé en forme de feuille (3), l'ordinateur (4) ayant accés à un fichier image correspondant à un support imprimé en forme de feuille (3) et la position d'au moins un point de référence (14) étant déterminée dans le fichier d'image, l'ordinateur (4) calculant la position relative du point de mesure (15) indiqué par rapport au point de référence (14) dans le fichier image, sur le support imprimé en forme de feuille (3), l'appareil de mesure (1, 9) approcahnt le point de mesure (15) correspondant et mesurant le support imprimé en forme de feuille (3), et la sélection du point de mesure (15) étant effectuée sur un disposotif d'affichage (5) de l'ordinateur (4),
**caractérisé en ce que**
l'ordinateur (4) a accés aux données d'une phase d'impression préliminaire (16), **en ce que** les données de représentation sont transmises au dispositif d'affichage (5) de forme réduite en fonction de la résolution du dispositif d'affichage (5) et **en ce que** pour la sélection du point de mesure (15) sur le dispositif d'affichage (5), au moins des zones du fichier d'imae sont représentées aggrandies sur le dispositif d'affichage (5),
seules les données de la zone de sélection aggrandies du fichier d'image étant transmises de la phase préliminaire d'impression (16) à l'ordinateur (4) et ensuite affichées agrandies.

2. Procédé selon la revendication 1,
**caractérisé en ce que** le dispositif d'affichage (5) est un écran tactile.

3. Procédé selon la revendication 2,
**caractérisé en ce que** la sélection du point de mesure (15) est exécuté au moyen d'une souris d'ordiamteur (13) ou d'un appareil de sélection similaire (6).

4. Procédé selon l'une des revendications précédentes,
**caractérisé en ce**
**qu'**au début de l'opération de mesure, la position d'un point de référence (14) sur le support imprimé (3) est approchée par commande de l'appareil de mesure (1, 9) et la position du point de référence approchée (14) est mémorisée dans l'ordinateur (4).

5. Procédé selon l'une des revendications 1 à 4,
**caractérisé en ce**
**que** le point de référence (14) est appliqué comme marque sur le support imprimé (3) et se trouve dans une région prédétermniéee du support imprimé (3), et en ce que l'appareil de mesure (1, 9) détecte automatiqement le point de référence (14) dans la zone prédéterminée du substrat imprimé (3).

6. Procédé selon l'une des revendicatins 1 à 5,
**caractérisé en ce**
**que** le point de référence (14) est appliqué de manière codée sur le support imprimé (3), en ce que l'appareil de mesure (1, 9) balaye la suface du substrat imprimé (3) en recherchant l'élément de référene spécifique et dont la position est transmise à l'ordinateur et y est mémorisée.

7. Procédé selon l'une des revendications précédentes,
**caractérisé en ce**
**que** l'ordinateur (4) saisit les fichiers d'images par saisie optique d'un substrat imprimé (3) avec une caméra.
